# FASCICULE DE BREVET EUROPEEN

(11) **EP 3 679 695 B1**
(45) Date de publication et mention de la délivrance du brevet: **22.09.2021**
(21) Numéro de dépôt: 18759972.5
(22) Date de dépôt: 03.09.2018
(51) Int. Cl.: H04L 12/833, H04L 12/28

(54) **PROCÉDÉ ET INTERFACE RÉSEAU POUR UN ÉQUIPEMENT DOMOTIQUE, SYSTÈME DOMOTIQUE POUR UN BÂTIMENT CONTENANT CET ÉQUIPEMENT DOMOTIQUE ET BÂTIMENT COMPORTANT UN TEL SYSTÈME DOMOTIQUE**
VERFAHERN UND NETZWERKSCHNITTSTELLE FÜR EIN HEIMAUTOMATISIERUNGSGERÄT, HEIMAUTOMATISIERUNGSSYSTEM FÜR EIN GEBÄUDE MIT EINEM SOLCHEN HEIMAUTOMATISIERUNGSGERÄT UND GEBÄUDE MIT EINEM SOLCHEN HEIMAUTOMATISIERUNGSSYSTEM
METHOD AND NETWORK INTERFACE FOR HOME-AUTOMATION APPARATUS, HOME-AUTOMATION SYSTEM FOR A BUILDING CONTAINING SUCH HOME-AUTOMATION APPARATUS AND BUILDING COMPRISING SUCH HOME-AUTOMATION SYSTEM

(30) Priorité: 04.09.2017 FR 1758146
(43) Date de publication de la demande: 15.07.2020
(73) Titulaire: Somfy Activites SA, 74300 Cluses (FR)
(72) Inventeur: FARGIER, Sylvain, 74300 Cluses (FR); VANDERSCHAEVE, Vincent, 74250 Saint Jean De Tholome (FR)
(74) Mandataire: Lavoix
(86) Numéro de dépôt international: PCT/EP2018/073608
(87) Numéro de publication internationale: WO 2019/043223

(56) Documents cités:
- US-A- 5 963 560

## Description

La présente invention concerne une interface réseau pour un équipement domotique, un système domotique pour un bâtiment contenant cet équipement domotique ainsi qu'un bâtiment comprenant un tel système domotique.

Plus généralement, l'invention se rapporte au domaine des automatismes pour les bâtiments, aussi bien pour les bâtiments à usage commercial que les bâtiments à usage résidentiel, qu'ils soient individuels ou collectifs.

Il existe de nombreux bâtiments pourvus d'équipements commandables visant à assurer des fonctions de confort et de gestion d'énergie, comme le chauffage, la ventilation et la climatisation, mais aussi de gestion de l'éclairage et de pilotage des ouvrants, tels que des stores ou des volets roulants placés devant des fenêtres du bâtiment ou encore de la sécurisation à distance par contrôle de systèmes de fermetures (portes, serrures). Les automatismes sont les ensembles de règles qui régissent la commande des équipements électriques par un système de supervision programmable, afin d'assurer un meilleur confort des occupants du bâtiment ou encore d'optimiser la consommation d'énergie. Ces automatismes sont commandés par un système de supervision programmable, afin d'assurer un meilleur confort des occupants du bâtiment ou encore d'optimiser la consommation d'énergie. Ces applications sont désignées sous le terme « Gestion Technique du Bâtiment » ou, plus généralement, sous l'expression « Building Automation Systems » en langue anglaise. Dans le résidentiel, les automatismes sont plus souvent désignés par le terme de « domotique ». Pour simplifier, par la suite, le terme domotique sera utilisé pour désigner autant des applications résidentielles que tertiaires.

Typiquement, les équipements d'un même bâtiment sont connectés à une unité de commande, qui a pour fonction de superviser ces équipements et d'en piloter le fonctionnement. Cette connexion est souvent réalisée en raccordant les équipements par des liaisons filaires dédiées. Par exemple, chaque équipement est connecté directement à l'unité de commande au moyen d'un ou plusieurs câbles, suivant une configuration maître/esclave.

Une telle situation n'est cependant pas toujours satisfaisante, car la moindre modification du système domotique ou du fonctionnement des équipements nécessite un recâblage du système, ce qui est coûteux et compliqué à mettre en œuvre dans la mesure où cela requiert de faire appel à un installateur spécialisé.

Dans d'autres systèmes connus, cette connexion est réalisée en raccordant les équipements à un bus de données commun, tel qu'un bus multipoints autorisant une connexion bidirectionnelle, par exemple de type RS485. Ce bus de données est relié à l'unité centrale, de manière à former un réseau qui autorise l'échange de données entre les équipements et l'unité de commande.

Une telle situation présente cependant des inconvénients.

D'une part, l'installation du système est plus compliquée, car les équipements doivent être chacun configurés manuellement afin d'en configurer le fonctionnement et les rendre aptes à communiquer sur le réseau. Il faut donc rajouter, en sus d'une opération de câblage déjà lourde en elle-même, toute une phase de paramétrage réseau qui nécessite là encore l'intervention d'installateurs spécialisés.

De plus, dans une certaine mesure, cette situation offre aussi une flexibilité limitée, car toute modification postérieure à l'installation nécessite de recâbler le réseau, que ce soit pour ajouter de nouveaux équipements ou pour modifier leur répartition dans le bâtiment.

D'autre part, cette situation connue présente des limites en termes de nombre d'équipements pouvant être accueillis dans le réseau. Par exemple, les solutions de type RS485 couramment utilisées présentent des capacités d'adressage limitées, et ne permettent en pratique de ne connecter qu'au maximum 255 équipements individuels sur un même bus. Cette limite est rédhibitoire lorsqu'il s'agit d'équiper des bâtiments de grande taille et/ou comprenant un grand nombre d'équipements à gérer. Or, les applications contemporaines rendent nécessaire de pouvoir gérer un nombre d'équipements de plus en plus important, par exemple dans le cadre de l'internet des objets ou de la gestion dite intelligente des bâtiments.

En outre, l'architecture de ces réseaux connus peut conduire à l'apparition de temps de latence élevés lors de la communication entre un équipement et l'unité de commande. Cela s'explique notamment par le fait que la commande est centralisée et que les informations émises par les équipements doivent remonter vers le bus pour être traitées de façon centralisée par l'unité de contrôle. Or, pour certaines applications, un temps de latence trop élevé peut générer une insatisfaction chez l'usager souhaitant utiliser l'équipement, voire être préjudiciable au bon fonctionnement de l'équipement.

Il est également possible d'organiser les équipements du bâtiment selon des réseaux de communication.

Les messages échangés sur le réseau de communication entre les différents équipements sont affectés d'un niveau de priorité d'émission afin d'éviter de congestionner le trafic sur le réseau de communication. Un problème se pose lorsqu'un message est envoyé sur une portion du réseau de communication avec un niveau de priorité d'émission faible alors qu'un grand nombre de message de priorité d'émission plus élevée circulent ou sont en attente d'émission sur cette même portion de réseau de communication. En effet, chaque message de niveau de priorité d'émission donné doit attendre que tous les messages dont le niveau de priorité d'émission est supérieur au sien aient été émis avant de pouvoir accéder au réseau. Un équipement peut donc se retrouver dans une situation où il ne peut pas envoyer de message à cause d'une saturation du trafic.

Un exemple de l'art antérieur se trouve dans le document US5963560.

C'est à tout ou partie de ces inconvénients qu'entend remédier l'invention en proposant un système domotique comprenant un réseau de communication amélioré qui permette de gérer plus simplement un grand nombre d'équipements domotiques au sein d'un bâtiment tout en permettant une meilleure évolutivité et flexibilité d'utilisation que dans les solutions connues.

Un but de l'invention est notamment d'éviter aux messages de niveau de priorité d'émission faible d'être bloqués trop longtemps par l'envoi de messages de niveau de priorité d'émission plus élevé.

L'invention est définie par les revendications formulées à l'annexe. Les modes de réalisations qui ne sont pas décrits dans les revendications sont simplement des exemples utilisés pour comprendre l'invention.

A cet effet, l'invention concerne un procédé de gestion de trafic dans un réseau de communication, le procédé étant mis en œuvre par une interface réseau d'un élément communicant lors de l'émission d'un message sur une liaison physique du réseau de communication, dans lequel l'interface réseau est adaptée pour implémenter une pile de protocole et dans lequel les étapes du procédé sont mises en œuvre au niveau d'une couche de liaison de données de la pile de protocole, le message comprenant un niveau de priorité d'émission défini par une valeur de priorité dont la valeur la plus basse indique un niveau de priorité maximal et la valeur la plus élevée indique un niveau de priorité minimal,
le procédé comprenant des étapes consistant à :
- détecter un état interne de la couche de liaison de données,
- tant que l'état interne de la couche de liaison de données ne permet pas l'envoi immédiat du message :
   - attendre pendant une période d'attente que l'état interne de la couche de liaison de données passe dans un état de priorité égale ou inférieure au niveau de priorité d'émission,
   - augmenter le niveau de priorité d'émission du message d'une unité à chaque fois que l'état interne de la liaison physique reprend un état d'occupation signifiant qu'un signal est présent sur la liaison physique pendant cette période d'attente ;
- envoyer le message sur la liaison physique lorsque l'état interne de la couche de liaison de données passe dans un état de priorité égale ou inférieure au niveau de priorité d'émission.

Grâce à l'invention, le réseau de communication permet de gérer un grand nombre d'équipements domotiques et un grand nombre d'équipements réseau au sein du bâtiment, tout en présentant une flexibilité d'installation et d'évolution accrues. De surcroît, la gestion des priorités d'émission des messages envoyés par les équipements domotiques et/ou réseau au niveau de chaque bus de données permet de limiter le risque qu'un équipement domotique ne se trouve dans une situation où il ne peut pas envoyer de message à cause d'une saturation du bus de données.

Selon des aspects avantageux mais non obligatoires de l'invention, un tel système peut incorporer une ou plusieurs des caractéristiques suivantes, prises isolément ou suivant toute combinaison techniquement admissible :
- La couche de liaison de données prend successivement différents états internes :
   - un état d'occupation ou de réception, pendant une période d'occupation, au cours de laquelle un signal porteur est présent sur la liaison physique ;
   - un état tampon, suite à la fin de l'état d'occupation de la liaison physique, pendant une période prédéterminée,
   - un état de priorité maximale,
   - des états de priorité intermédiaire,
   - un état de priorité minimale,
   la durée des états de priorité étant prédéterminée ou se terminant par un nouvel état d'occupation.
- La pile de protocole comprend une couche physique, configurée pour assurer la gestion de signaux physiques porteurs de données du message sur la liaison physique, la couche de liaison de données configurée pour assurer le transfert des données au travers des interfaces réseaux de communication et une couche réseau qui assure l'échange et la transmission des messages au sein du réseau de communication.
- La trame de données contient en outre des données à transmettre, celles-ci encapsulant un paquet réseau associé à une couche de la pile de protocole, le procédé comprenant une étape de préparation du message à envoyer, consistant à initialiser la valeur de priorité d'émission de la trame avec une valeur égale à une valeur de priorité de référence du paquet réseau, celle-ci étant fonction du type d'élément communicant émettant le message ou fonction d'une criticité prédéfinie du message.
- La valeur de priorité est une valeur numérique, telle qu'un nombre entier, encodé sous forme binaire au sein d'un champ dédié d'un en-tête du message, cette valeur numérique étant comprise au sein d'un intervalle fermé allant de 0 à 9.
- Le procédé comprend une réinitialisation de la valeur de priorité d'émission de la trame à partir d'une valeur de priorité de référence du paquet réseau après chaque transmission du message par une interface réseau.
- Lors de l'étape d'envoi du message sur la liaison physique, lorsque l'état interne de la couche de liaison de données passe dans un état de priorité égale ou inférieure au niveau de priorité, l'émission comprend une durée d'attente aléatoire entre le passage de l'état interne de la couche de liaison de données dans un état de priorité égale ou inférieure au niveau de priorité d'émission et l'envoi du message.

Selon un autre aspect, l'invention concerne une interface réseau pour un élément communicant faisant partie d'un système domotique incluant un réseau de communications pourvu d'au moins une liaison physique, la liaison physique reliant plusieurs éléments communicants au sein du réseau de communications, l'interface réseau étant configurée pour mettre en œuvre le procédé de gestion de trafic tel que décrit précédemment lors de chaque tentative d'envoi d'un message sur la liaison physique.

Selon un autre aspect, l'invention concerne un élément communicant comprenant une interface réseau telle que décrite précédemment.

Selon un autre aspect, l'invention concerne un système domotique pour un bâtiment comportant des éléments communicants, selon la revendication précédente, répartis au sein du bâtiment et un réseau de communication auquel sont connectés les éléments communicants au moyen de liaisons physique, le réseau de communication autorisant une communication des éléments communicants entre eux selon un protocole de communication prédéfini.

Selon des aspects avantageux mais non obligatoires de l'invention, un tel système peut incorporer une ou plusieurs des caractéristiques suivantes, prises isolément ou suivant toute combinaison techniquement admissible :
- Le réseau de communication comporte une pluralité de sous-réseaux, chaque sous-réseau contenant des éléments communicants connectés entre eux au sein de ce sous-réseau au moyen des liaisons physiques.
- Le protocole de communication est le protocole IP.
- La liaison physique est un bus de données filaire multipoints.

Selon un autre aspect, l'invention concerne un bâtiment équipé d'un système domotique tel que décrit précédemment, et comprenant des éléments communicants tels que décrits avant.

Ce bâtiment peut comprendre plusieurs zones, dans lequel le système domotique est conforme à celui décrit auparavant, et dans lequel chaque sous-réseau est associé à une zone du bâtiment, chaque sous-réseau contenant au moins un des éléments communicants.

L'invention sera mieux comprise et d'autres avantages de celle-ci apparaîtront plus clairement à la lumière de la description qui va suivre, d'un mode de réalisation d'un système domotique pour un bâtiment, donnée uniquement à titre d'exemple et faite en référence aux dessins annexés dans lesquels :
- la figure 1 est une représentation schématique d'un bâtiment comprenant un système domotique conforme à l'invention ;
- la figure 2 est une représentation schématique d'un réseau de communication du système domotique de la figure 1 pour connecter des équipements du système domotique ;
- la figure 3 est une représentation schématique d'une interface réseau utilisée dans des équipements du système domotique appartenant au réseau de communication de la figure 2 ;
- la figure 4 est une représentation schématique d'un appareil réseau utilisé dans le réseau de communication de la figure 2 ;
- la figure 5 est un ordinogramme d'un procédé d'émission d'un message sur un bus de données du réseau par un appareil réseau du système de la figure 1.

Par la suite le terme " priorité " fera référence à la priorité d'émission.

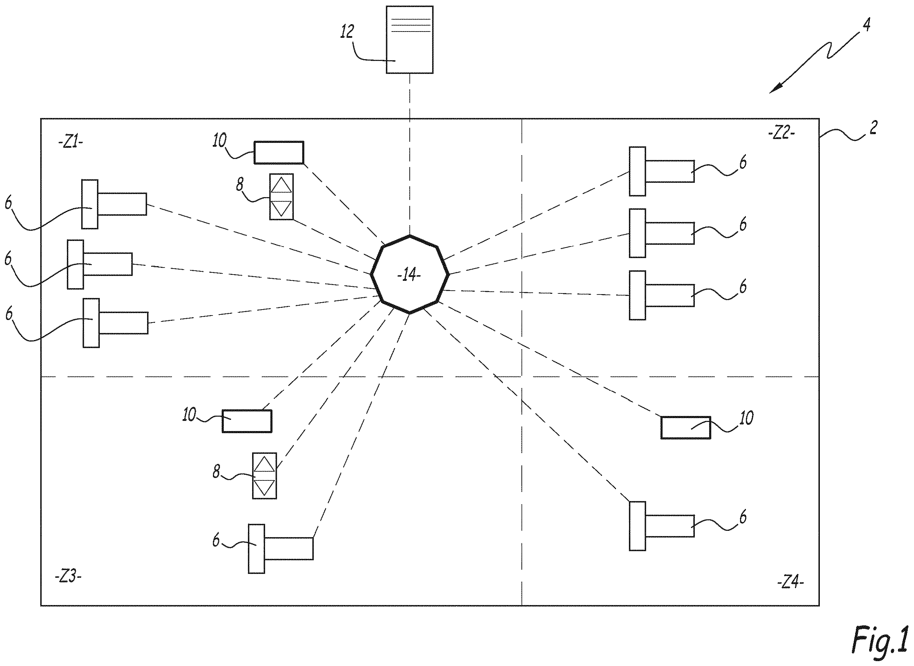

La figure 1 représente un bâtiment 2, comprenant plusieurs zones Z1, Z2, Z3, Z4. Le bâtiment 2 est équipé d'un système domotique 4 qui comporte un ensemble d'équipements domotiques répartis dans les zones du bâtiment 2, ainsi qu'un système de commande de ces équipements domotiques.

Le système domotique 4 est ici destiné à procurer des fonctions de confort et/ou de gestion d'énergie du bâtiment 2, comme le chauffage, la ventilation et la climatisation, ainsi que des fonctions de gestion de l'éclairage, de pilotage des ouvrants, tels que des stores ou des volets roulants placés devant des fenêtres du bâtiment 2 et/ou des fonctions de sécurité comme la surveillance de locaux et l'alarme.

L'ensemble d'équipements domotiques comprend des équipements domotiques tels que des appareils domotiques commandables 6, des points de commande 8 et des capteurs 10.

Le système de commande comporte notamment une unité de commande 12 programmable et un réseau de communication 14, interne au bâtiment 2, le réseau de communication 14 étant agencé pour permettre la communication des équipements domotiques du système domotique 4 avec l'unité de commande 12. Les équipements domotiques du système domotique 4 qui sont connectés à ce réseau de communication 14 sont, dans ce qui suit, dits appartenir au réseau de communication 14.

Les équipements domotiques et le système de commande sont ici raccordés à une ou plusieurs sources d'alimentation électrique, non illustrée, du bâtiment 2.

Les zones du bâtiment 2 correspondent à des portions du bâtiment 2 qui sont situées à l'intérieur et/ou l'extérieur de ce bâtiment et qui sont destinées à recevoir chacune une partie des équipements domotiques du système domotique 4.

Le bâtiment 2 peut être un ensemble de bureaux, ou un bâtiment à usage d'habitation, ou un bâtiment à usage commercial ou industriel, ou toute combinaison de ces usages. Il peut notamment s'agir d'un immeuble ou d'une maison individuelle.

Ainsi, au sens de la présente description, le terme « domotique » n'est pas limité à un usage purement domestique et résidentiel.

Par exemple, des zones du bâtiment 2 correspondent à des niveaux du bâtiment 2, tels que des étages ou des sous-sols. Ces zones peuvent aussi être des pièces, des groupes de pièces du bâtiment 2, éventuellement séparées les unes des autres par des cloisons, ces pièces pouvant être réparties au sein d'un ou plusieurs niveaux du bâtiment 2. Ces zones peuvent également correspondre à des façades ou des parties de façade comme une partie de façade correspondant à un même étage.

Ces zones peuvent être délimitées de façon indépendante de la structure physique du bâtiment 2. Par exemple, une même pièce du bâtiment 2 peut comporter plusieurs zones. De telles zones peuvent également être situées à l'extérieur du bâtiment 2, par exemple lorsqu'elles correspondent à une façade ou une portion de façade du bâtiment 2.

Ces zones sont par exemple définies lors de la conception du bâtiment 2 et/ou lors de la conception et/ou l'installation du système domotique 4.

De préférence, les zones du bâtiment 2 sont distinctes les unes des autres. Toutefois, en variante, des zones du bâtiment 2 peuvent se recouper et/ou être imbriquées entre elles.

Dans cet exemple, seules quatre zones, ici notées Z1, Z2, Z3 et Z4, sont définies en référence au bâtiment 2. Toutefois, en pratique, ce nombre peut être différent. Il est notamment adapté en fonction de la configuration du bâtiment 2 et des fonctions du système domotique 4.

Pour simplifier la figure 1, les zones Z1, Z2, Z3 et Z4 sont illustrées de façon schématique à l'intérieur d'un même étage du bâtiment 2.

De préférence, chaque appareil domotique 6 commandable comporte un actionneur pilotable au moyen d'au moins un signal de commande.

Les appareils domotiques 6 sont ici illustrés de façon identique. Toutefois, ils peuvent présenter des différences entre eux et assurer des fonctions différentes au sein du système domotique 4.

Par exemple, l'actionneur de l'appareil 6 contient un moteur électrique couplé avec une charge mécanique et agencé pour déplacer et/ou régler un élément du bâtiment 2.

Selon un exemple, la charge mécanique de l'appareil 6 est un volet occultant, tel qu'un panneau, un store ou un rideau opaque, associé à au moins une ouverture du bâtiment 2, telle qu'une fenêtre ou une baie vitrée. Le déplacement de ce volet occultant permet de réguler la quantité d'ensoleillement reçue par le bâtiment 2 au travers de cette ouverture.

Selon un autre exemple, la charge mécanique de l'appareil 6 est un compresseur adapté pour mettre en œuvre un cycle de détente-compression d'un fluide caloporteur au sein d'un système de réfrigération du bâtiment 2, tel qu'un climatiseur ou une pompe à chaleur, en vue de réguler la température à l'intérieur du bâtiment 2.

Selon encore un autre exemple, la charge mécanique de l'appareil 6 est une pompe ou un ventilateur destiné à mettre en mouvement un volume de fluide au sein du bâtiment 2, par exemple pour aspirer ou souffler de l'air au sein d'un système de ventilation, ou pour faire circuler de l'eau ou un fluide caloporteur au sein d'une conduite dédiée.

En variante, l'actionneur de l'appareil 6 peut piloter un dispositif de commutation électrique, afin de commander l'allumage et l'extinction d'une source lumineuse, telle qu'une batterie de lampes au néon ou à diodes électroluminescentes, au sein du bâtiment 2.

L'appareil domotique commandable 6 peut également être un éclairage, par exemple, un éclairage intérieur, extérieur ou un système de commande d'éclairage, un système d'alarme, ou encore une caméra vidéo, en particulier une caméra de vidéosurveillance.

Un point de commande 8 est destiné à recevoir des instructions de pilotage de la part d'un utilisateur du bâtiment 2, en vue de piloter, directement ou indirectement, un ou plusieurs des appareils domotiques commandables 6 et/ou de piloter l'unité de commande 12.

A cet effet, chaque point de commande 8 comporte ici une interface homme-machine, non illustrée, comprenant des moyens d'entrée de données, tels qu'un ou plusieurs interrupteurs et/ou un ou plusieurs boutons poussoirs et/ou un ou plusieurs boutons rotatifs et/ou un écran tactile. Le point de commande 8 peut aussi comporter une interface de connexion pour y raccorder des moyens de commande externes, par exemple un ou plusieurs interrupteurs individuels disposés autour du point de commande 8 et étant raccordés par une liaison filaire à ce dernier.

L'interface homme-machine du point de commande 8 peut également comporter des moyens d'affichage, tels que des témoins lumineux et/ou un écran électronique, par exemple à cristaux liquides, pour afficher, à destination de l'utilisateur, des informations relatives au fonctionnement du système domotique 4 ou à des instructions saisies sur ladite interface homme-machine.

Les points de commande 8 peuvent se présenter sous la forme d'une télécommande portative associée à un récepteur fixe ou, en variante, d'un terminal de commande fixe solidarisé à un mur du bâtiment 2.

Là encore, les points de commande 8 sont ici illustrés de façon identique, mais ils peuvent présenter des différences entre eux et assurer des fonctions différentes au sein du système domotique 4.

Chaque capteur 10 est destiné à convertir une ou plusieurs grandeurs physiques relatives à l'état du bâtiment 2 ou de son environnement en un ou plusieurs signaux proportionnels à cette grandeur physique. Ce signal est, par exemple, un signal électrique, un signal lumineux ou un signal radiofréquence. Ce signal peut être transmis par le capteur à destination d'au moins un équipement domotique et/ou du système de commande, par exemple, l'unité de commande 12.

Un ou plusieurs capteurs 10, peuvent être intégrés à un appareil domotique commandable 6, à un point de commande 8 ou encore à l'unité de commande 12. L'installation domotique 4 peut également comprendre un ou plusieurs capteurs indépendants à ces éléments.

Par exemple, les grandeurs physiques mesurées par les capteurs 10 sont, de façon non limitative, une température, par exemple une température d'un mur ou de l'air ambiant, un taux d'humidité, une valeur de luminosité, une valeur de pression de l'air ambiant, une valeur de consommation par exemple d'eau, de gaz ou d'électricité, l'état d'ouverture d'un volet roulant, la position d'un ouvrant tel une fenêtre, motorisée ou non ou encore la présence ou l'absence d'un utilisateur.

Là encore, les capteurs 10 sont ici illustrés de façon identique mais peuvent présenter des différences entre eux au sein du système domotique 4.

De manière générale, chaque équipement domotique comprend une interface réseau 40, qui lui permet de communiquer sur le réseau 14 et qui sera définie plus loin dans la description.

A titre d'exemple illustratif, sur la figure 1, la zone Z1 comporte trois appareils domotiques commandables 6, un point de commande 8 et un capteur 10. La zone Z2 comporte trois appareils domotiques 6. La zone Z3 comporte un appareil domotique 6, un point de commande 8 et un capteur 10. La zone Z4 comporte un appareil domotique 6 et un capteur 10.

Par exemple, les trois appareils domotiques commandables 6 de la zone Z2 sont adaptés pour déplacer des volets occultants équipant des ouvertures du bâtiment 2 ménagées au niveau de cette zone Z2. Toujours dans cet exemple, les équipements domotiques commandables 6 de la zone Z1 font ici partie d'un système de climatisation et de réfrigération de l'air circulant dans la zone Z1. Leur fonctionnement est régulé en fonction d'ordres de pilotage reçus par le point de commande 8 et en fonction d'une température mesurée par le capteur 10 situés dans cette zone Z1.

Chaque équipement domotique du système domotique 4, dont notamment les appareils domotiques commandables 6, les points de commande 8 et les capteurs 10, est connecté à l'unité de commande 12 par l'intermédiaire du réseau de communications 14 et comporte à cet effet une interface réseau 40 pour se connecter à ce réseau de communications 14. L'unité de commande 12 comporte également une interface réseau 40.

Par exemple, chaque appareil domotique 6 reçoit des signaux de commande par l'intermédiaire du réseau de communication 14. Chaque point de commande 8 transmet les instructions de pilotage reçues par l'intermédiaire du réseau de communication 14. Chaque capteur 10 envoie les informations mesurées par l'intermédiaire du réseau de communication 14.

La communication s'effectue selon un protocole de communication donné.

Par exemple, la communication s'effectue par un échange de messages, par exemple sous forme de paquets, ces messages contenant chacun un en-tête, qui inclut une destination du message, et des données utiles, comme ordre de commande ou une valeur de grandeur physique mesurée par un capteur.

De préférence, le protocole de communication utilisé est un protocole IP (« Internet Protocol »), par exemple le protocole IPv6. En variante, le protocole de communication est le protocole IPv4.

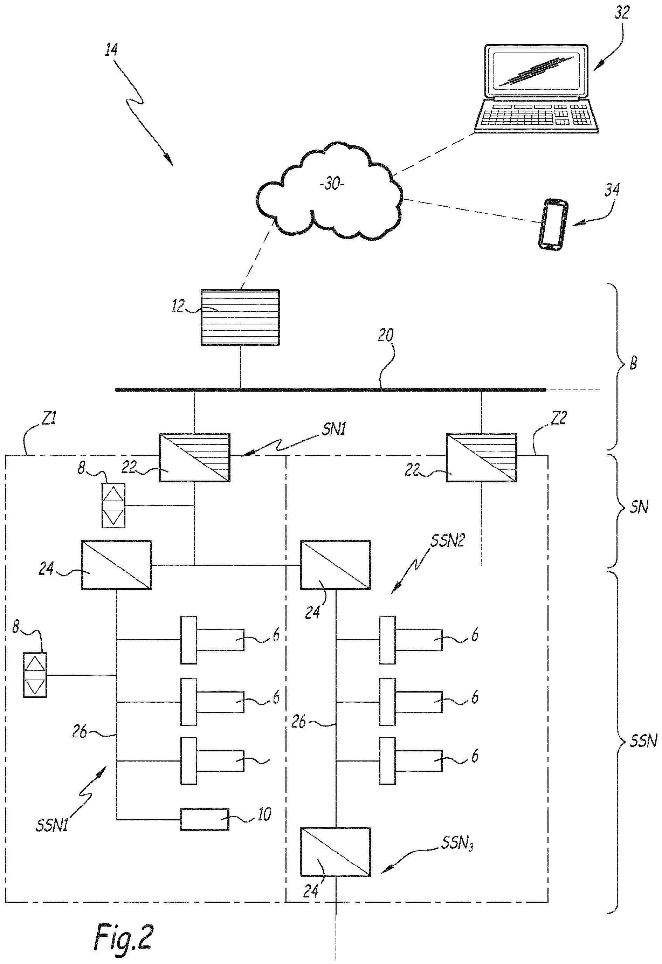

La figure 2 représente plus en détail l'exemple du réseau de communication 14 de la figure 1. Pour faciliter la lecture de cette figure 2, les équipements domotiques 6, 8, 10 associés aux zones Z3 et Z4 du bâtiment 2 n'y sont pas illustrés.

Le réseau de communication 14 est un réseau hiérarchique à plusieurs niveaux de hiérarchie, également appelé rangs. Il comporte un réseau principal B, qui comprend notamment un bus de données commun, formant une liaison physique dorsale 20, aussi dite « backbone » en langue anglaise, à laquelle l'unité de commande 12 est connectée.

Le réseau de communication 14 comporte également au moins un sous-réseau, noté de façon générique par la référence SN. Ce sous-réseau comporte un équipement réseau 22, 24, qui est directement connecté à la liaison dorsale 20 par l'intermédiaire d'une interface réseau 40 et qui forme la tête de ce sous-réseau SN. Il peut s'agir d'un équipement réseau d'interconnexion, également appelé passerelle 22, destiné à interconnecter deux parties de réseaux distinctes, par exemple, de technologies différentes. Il peut également s'agir d'un routeur 24 lorsque le réseau principal B et le sous-réseau SN sont de même nature. Les passerelles et les routeurs ont des fonctionnements semblables à différence que le routeur ne convertit pas les formats de transmissions de données. Ces deux équipements réseau sont des éléments intermédiaires du réseau de communication 14 assurant le routage des paquets. Leur rôle est de faire transiter des paquets d'une interface réseau 40 vers une autre selon un ensemble de règles formant une table de routage.

Dans l'exemple de la figure 2, deux passerelles 22 sont connectées à la liaison dorsale 20, formant ainsi deux sous-réseaux SN1 et SN2 distincts. Seul l'un de ces deux sous-réseaux, portant la référence SN1, est décrit dans ce qui suit.

En variante, le nombre de sous-réseaux SN peut être différent.

Les sous-réseaux SN sont directement connectés au réseau principal par l'intermédiaire de passerelles, et ont un premier rang associé dans le réseau hiérarchique.

Chaque sous-réseau SN contient au moins un équipement domotique 6, 8, 10 du système domotique 4, connecté à la passerelle 22 correspondante par l'intermédiaire d'une liaison physique 26, de préférence câblée.

Le réseau de communication 14 comporte en outre des sous-sous-réseaux de rang inférieur à celui des sous-réseaux SN, et sont notés de façon générique par la référence SSN.

Chaque sous-sous-réseau SSN comporte un équipement réseau, avantageusement un routeur 24, le connectant à un sous réseau SN ou à un sous-sous-réseau de niveau hiérarchique supérieur au sien. L'équipement réseau 22, 24, forme la tête de ce sous-sous-réseau SSN.

En référence à l'exemple de la figure 2, si un rang « n » est associé au sous-réseau SN1, chaque sous-sous-réseau SSN1 et SSN2 a un rang « n-1 » associé, et le sous-sous-réseau SSN3 a un rang « n-2 ».

Chaque routeur 24 tête de sous-sous-réseau de rang « n-1 » est connecté à une passerelle 22 par l'intermédiaire d'une liaison physique 26, de préférence câblée.

Lorsque le réseau de communication 14 comporte plusieurs niveaux de hiérarchie, chaque équipement réseau 22, 24 tête de sous-sous-réseau de rang « n-k », avec k supérieur ou égal à 2, est connecté à un routeur 24 de rang supérieur « n-k+1 », par l'intermédiaire d'une liaison physique 26, de préférence câblée.

Dans un mode de réalisation, le réseau hiérarchique peut comprendre jusqu'à douze niveaux de hiérarchie, en incluant celui du réseau principal B.

Chaque sous-sous-réseau SSN comporte un ou plusieurs équipements domotiques 6, 8, 10, connectés au routeur 24 correspondant par l'intermédiaire d'une liaison physique 26, chaque équipement domotique étant connecté à la liaison physique 26 à l'aide de leurs interfaces réseau 40 respectives. Les équipements domotiques connectés, via une même liaison physique 26, à un même routeur 24 sont ici dits faire partie d'un même sous-réseau local.

De préférence, les sous-réseaux SN et chaque sous-sous-réseau SSN de rang inférieur à celui du sous-réseau SN sont associés chacun à une zone du bâtiment 2.

Un sous-réseau SN et/ou un sous-sous-réseau SSN est dit « associé » à une zone Z1, Z2, Z3, Z4 du bâtiment 2 lorsque les équipements domotiques 6, 8, 10 appartenant à ce sous-réseau sont eux-mêmes associés à cette zone, par exemple parce qu'ils sont physiquement localisés à l'intérieur de cette zone Z1, Z2, Z3, Z4 du bâtiment 2.

Le nombre et la structure des sous-réseaux SN et des sous-sous-réseaux SSN, ainsi que leur association aux zones du bâtiment 2, sont de préférence choisis en fonction de la configuration du bâtiment 2 et des fonctionnalités remplies par le système domotique 4.

De préférence, les liaisons physiques 26 sont des bus de données série multipoints de type RS485 ou EIA-485.

De préférence, la liaison physique 26 qui connecte chaque équipement réseau22, 24 entre eux et qui les connecte aux équipements domotiques 6, 8, 10 est un bus de données série multipoints de type RS485.

L'utilisation d'une liaison physique 26 de type RS485 présente des avantages dans ce réseau de communication 14, car elle rend possible l'utilisation de bus de données de grande longueur, par exemple jusqu'à 1km de long, sans trop dégrader la qualité du signal qui y circule. La limitation du nombre d'équipements domotiques 6, 8, 10 et/ou d'équipements réseaux 22, 24 connectés sur une même liaison physique 26 n'est pas pénalisante, grâce à l'architecture hiérarchique qui permet de connecter un nombre important de sous-réseaux.

De façon optionnelle, l'unité de commande 12 est adaptée pour être connectée à un réseau de données extérieur 30, tel que le réseau internet, indépendamment du réseau de communication 14.

De cette manière, l'unité de commande 12 peut communiquer avec un serveur informatique distant connecté à ce réseau extérieur 30, par exemple pour envoyer des rapports sur l'état de fonctionnement du système domotique 4 à des fins de diagnostic, ou encore pour recevoir des instructions de pilotage. L'unité de commande 12 peut également communiquer par le réseau extérieur 30 avec un ou plusieurs utilisateurs distants par exemple pourvus d'un terminal de communication comme un ordinateurs 32, un appareil de téléphonie mobile intelligent ou « *smartphones* » en langue anglaise, une tablette tactile ou tout autre équipement équivalent.

Le réseau de communication 14 est adapté pour fonctionner suivant un protocole de communication prédéfini, tel que le protocole IP, afin d'assurer une communication entre les éléments communicants du système domotique 4 qui sont connectés à ce réseau de communication 14.

Dans le mode de réalisation préféré, le protocole de communication utilisé est le protocole IPv6.

Ce protocole de communication est ici implémenté à l'aide des interfaces réseau 40 qui équipent les divers équipements domotiques 6, 8, 10 et équipements réseau 22, 24 du système domotique 4 qui sont connectés par le réseau de communication 14, notamment grâce à leur interface réseau 40.

Par la suite, on désignera par le terme générique « élément communicant », les équipements réseau 22, 24 et les éléments communicants 6, 8, 10.

Les routeurs 24 et la ou les passerelles 22 comportent des interfaces réseau spécifiques. Par exemple, ces interfaces réseau implémentent chacune une pile de protocole, c'est-à-dire un empilement de couches de protocole, chaque couche de protocole s'appuyant sur celles qui sont en dessous afin d'y apporter un supplément de fonctionnalité.

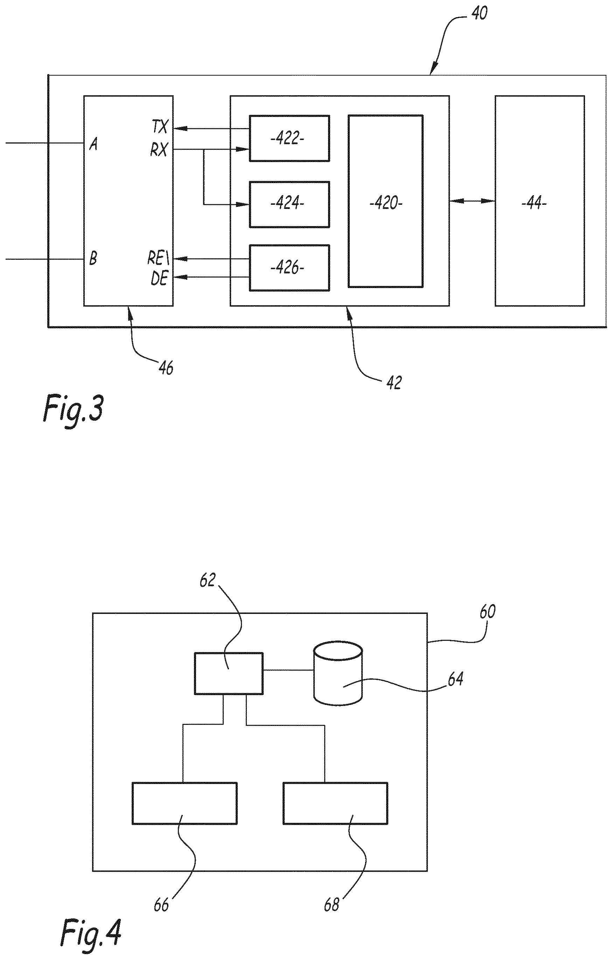

La figure 3 représente de façon schématique l'interface réseau d'un élément communicant. L'interface réseau d'un élément communicant a pour fonction de connecter cet élément communicant à un ou plusieurs réseaux de communication. Elle lui permet ainsi de communiquer avec les autres éléments communicants du ou des réseaux auquel il est connecté.

Comme illustré sur la figure 3, chaque interface réseau 40 comporte un contrôleur réseau 42, une mémoire 44 et un module d'entrée-sortie 46, aussi nommé « transceiver » en langue anglaise, le module d'entrée-sortie 46 étant ici pourvu d'un connecteur agencé pour raccorder physiquement le module d'entrée-sorties 46 à une couche physique du réseau de communication 14.

Dans cet exemple, la couche physique du réseau de communication 14 est en partie formée par les liaisons physiques 26.

Le contrôleur réseau 42 comporte un calculateur électronique, par exemple un ou plusieurs processeurs, microprocesseurs ou tout autre moyen équivalent, programmé pour assurer le traitement des données transitant par le réseau de communication 14 et par le connecteur du module d'entrée-sortie 46.

Par exemple, le contrôleur réseau 42 est programmé pour traiter automatiquement les données reçues par le module d'entrée-sortie 46 et étant destinées à l'interface réseau 40. Le traitement peut par exemple consister à extraire et décoder le contenu de paquets reçus par l'interface réseau et/ou transmettre ce contenu à l'équipement domotique auquel il est associé.

De façon complémentaire, le contrôleur réseau 42 est programmé pour préparer automatiquement les données émises par l'équipement domotique auquel il est associé, en vue de leur envoi vers un ou plusieurs équipements domotiques connectés au réseau de communication 14.

Enfin, le contrôleur réseau 42 est adapté à mettre en œuvre des instructions de code de programme permettant d'exécuter des étapes du procédé de configuration d'adresse réseau selon l'invention.

Les bus de données de type RS485, utilisés ici pour former, notamment, la liaison physique 26, comportent chacun une paire de fils conducteurs, de préférence torsadés. Pour transmettre des données sur ce bus, un signal porteur est émis, par exemple sous la forme d'une tension électrique entre cette paire de fils conducteurs, cette tension pouvant prendre des valeurs prédéfinies de façon à encoder une information, par exemple de façon binaire. La forme du signal porteur est par exemple définie par la norme TIA/EIA-485-A.

Dans cet exemple, la liaison 26 est une liaison bidirectionnelle de type « halfduplex ». Dans cet exemple, le contrôleur 42 comporte en outre un module 422 émetteur-récepteur asynchrone universel, abrévié UART, une unité 424 de détection d'un signal sur la liaison 26 et une unité 426 de commande du module émetteur-récepteur 46.

Le module 422 est connecté au module émetteur-récepteur 46 par une ligne d'émission de données TX et par une ligne de réception de données RX. L'unité 424 est connectée au module émetteur-récepteur 46 par la ligne de réception de données RX, ce qui lui permet de détecter la présence d'un signal porteur sur le bus 26. L'unité 426 est connectée au module émetteur-récepteur 46 par des lignes de commande RE\ et DE. Les modules 422, 424 et 426 sont connectés à l'unité 420 pour échanger des données avec celle-ci. Le module 46 transmet vers la liaison 26 les données qu'il reçoit depuis la ligne d'émission TX, et transmet vers la ligne de réception RX les données qu'il reçoit depuis la liaison 26, après les avoir décodées. Par exemple, l'unité 424 est configurée pour générer une interruption du calculateur 420 lorsqu'il détecte une transition du signal reçu sur la ligne de réception RX (« edge-triggered interrupt » en langue anglaise).

En variante, si la liaison 26 n'est pas une liaison de type RS485, alors l'interface 40 et notamment le module 46 sont adaptés en conséquence.

La mémoire 44 contient ici une adresse réseau 50, une partie d'adresse réseau ou au moins un identifiant, non illustrés, permettant d'identifier de façon unique l'interface réseau 40 sur le réseau de communication 14 et qui identifie donc l'équipement domotique correspondant sur le réseau de communication 14. L'interface réseau 40 est ici compatible avec le standard IPv6, c'est-à-dire apte à implémenter le protocole réseau IPV6.

En outre, la mémoire 44 contient avantageusement des instructions de code de programme exécutables pour assurer le fonctionnement précédemment décrit du contrôleur réseau 42.

La figure 4 représente schématiquement un équipement réseau 60 générique destiné à être utilisé dans le réseau de communication 14. L'équipement réseau 60 générique correspond par exemple à une passerelle 22 ou à un routeur 24.

Cet équipement réseau 60 comporte un dispositif programmable de calcul 62, comportant un ou plusieurs processeurs, une mémoire 64, une première interface réseau 66 et une deuxième interface réseau 68. La première interface réseau 66 est par exemple destinée à être connectée à un premier sous-sous-réseau, alors que la deuxième interface réseau 68 est destinée à être connectée à un deuxième sous-sous-réseau, de rang inférieur au premier sous-sous-réseau. Les première et deuxième interfaces réseau 66, 68 sont, par exemple, chacune physiquement similaires à l'interface 40.

Chaque équipement réseau 60 comporte au moins une adresse réseau 50. En particulier, à chaque interface réseau 66, 68 de l'équipement réseau 60 est associée une adresse réseau 50, qui sera décrite plus en détail ci-après.

Le dispositif programmable 62 est adapté à mettre en œuvre des instructions de code de programme permettant d'exécuter des étapes du procédé de configuration d'adresse réseau selon l'invention. Ces instructions de code de programme peuvent, par exemple, être stockées dans la mémoire 64 de l'équipement réseau.

Le dispositif programmable 62 est en outre programmé pour assurer un routage des paquets de données arrivant depuis la partie de réseau associé à l'une ou l'autre des première et deuxième interfaces réseau 66, 68 vers une partie du réseau de communication 14 connectée à l'autre interface réseau 66, 68, en fonction de la destination de ces paquets de données. A cet effet, l'équipement 60 comporte ici une table de routage, par exemple enregistrée au sein de la mémoire 64. Cette table de routage contient la liste de toutes les routes connues du réseau de communication 14.

Par exemple, si on se réfère au mode de réalisation de la figure 2, dans le cas d'un routeur 24, les première et deuxième interfaces réseau 66, 68 sont ici compatibles avec les bus de données de type RS485.

Une passerelle 22 présente un fonctionnement semblable à celui de l'équipement réseau 60 décrit ci-dessus, sauf qu'ici une des deux interfaces réseau 66, 68 est connectée avec la liaison dorsale 20.

En variante, un équipement réseau 60 a une interface réseau 66 destinée à une connexion amont (en anglais « uplink ») avec un équipement réseau de niveau de hiérarchie supérieur à celui de l'équipement réseau 60, et plusieurs interfaces 68 destinés aux connexions aval (en anglais « downlink ») avec des équipements réseau de niveau de hiérarchie inférieur à celui de l'équipement réseau 60.

Le protocole de communication utilisé par le réseau de communication 14 permet d'assurer l'adressage des messages échangés entre les éléments du système domotique 4.

Par exemple, lorsqu'un premier élément communicant du système domotique 4, tel qu'un point de commande 8, doit envoyer des données à destination d'un deuxième élément communicant du système domotique 4, tel qu'un appareil domotique commandable 6, alors le premier élément communicant (appelé source) génère un message contenant les données à envoyer et contenant l'adresse du deuxième élément communicant (appelé destinataire). Le message est ainsi routé au sein du réseau de communication 14 de l'élément communicant source jusqu'à atteindre le ou les éléments communicants destinataires.

Plus précisément, un message échangé entre des éléments communicants du réseau appartenant au même sous-réseau local ou au même sous-sous-réseau local transite par l'intermédiaire de la liaison physique 26 à laquelle sont connectés les éléments communicants du réseau. Un message échangé entre des éléments communicants du réseau n'appartenant pas au même sous-réseau local ou au même sous-sous-réseau local est routé au moyen du routeur 24 tête du sous-réseau local auquel est connecté l'élément communicant source, qui le redirige vers le sous-réseau auquel est connecté chaque élément communicant destinataire, éventuellement par l'intermédiaire des équipements réseau 22 et de la liaison dorsale 20.

Chaque équipement réseau 22, 24 et chaque élément communicant 6, 8, 10 du réseau de communication 14 possède au moins une interface réseau 40 ayant une adresse réseau 50 unique.

Par la suite, on assimilera l'adresse réseau 50 de l'interface réseau 40 d'un élément communicant à l'adresse réseau 50 de cet élément communicant.

Plus précisément, dans cet exemple, le protocole réseau utilisé au sein du réseau de communication 14 et, notamment, implémenté par les interfaces réseau 40 des éléments communicants, comporte ici plusieurs couches de protocole liées entre elles. Ces couches de protocole sont chacune implémentées par la pile de protocole de chaque interface réseau 40 par des moyens logiciels et/ou électroniques, notamment grâce au contrôleur réseau 42.

Par exemple, ce protocole réseau comporte en couches basses ou couches matérielles :
- une couche physique L1 (« physical layer » en langue anglaise), configurée pour assurer la gestion des signaux physiques porteurs de données sur la liaison physique 26,
- une couche de liaison de données L2 (« data link layer » en langue anglaise) configurée pour assurer le transfert des données entre les nœuds via les supports du réseau de communication et
- une couche réseau L3 (« network layer » en langue anglaise) qui assure l'échange et la transmission des messages au sein du réseau de communication 14.

La couche de liaison de données L2 contient ici deux sous-couches : une sous-couche de liaison logique, notée LLC, pour « Logical Link Control » en langue anglaise, et une sous-couche de contrôle d'accès au support, notée MAC, pour « Media Access Control » en langue anglaise.

Par exemple, lorsqu'un nœud du réseau de communication envoie des données sur la liaison physique 26 à destination d'un autre nœud du réseau de communication 14, alors un message est généré automatiquement, de façon successive, au niveau de chacune de ces couches, par l'interface réseau 40 correspondante.

A titre d'exemple illustratif, un paquet réseau est généré au niveau de la couche réseau L3, ce paquet contenant les données à envoyer ainsi qu'un en-tête qui comporte, notamment, une adresse réseau de destination qui identifie le ou les destinataires du message au sein du réseau de communication 14. Cet en-tête comporte ici une valeur de priorité de référence TC qui définit la priorité relative au paquet de données à transmettre. Avantageusement, la valeur de priorité de référence du message est choisie en fonction du type d'élément communicant qui est associé à cette interface et qui émet ce message. Par exemple, les messages émis par un point de commande 8 présentent, par défaut, un niveau de priorité de référence plus élevé que le niveau de priorité de messages émis par un capteur 10 ou par un appareil domotique commandable 6. En variante, un même équipement domotique peut émettre des messages ayant des niveaux de priorités de référence différentes selon la nature du message. Ce peut être le cas, par exemple, lorsqu'un appareil domotique commandable 6 envoie un message d'alarme signalant une défaillance critique, ou lorsqu'un capteur 10 mesure une grandeur physique qui excède un seuil d'alerte, comme c'est par exemple le cas pour un détecteur d'incendie ou une sonde de température. Dans ces cas de figure, le niveau de priorité de référence peut être maximal. D'autres conventions sont cependant possibles.

Cette valeur de priorité de référence est ici une valeur numérique, telle qu'un nombre entier, ici encodé sous forme binaire au sein d'un champ dédié de l'en-tête.

Par exemple, dans le protocole IPv6, chaque paquet comporte, dans son en-tête, un champ dit « Traffic Class » et qui contient la valeur de priorité de référence TC.

Ensuite, une trame de données est générée au niveau de la couche de liaison de données L2, cette trame encapsulant le paquet précédemment généré. Cette trame contient un en-tête qui incorpore des données relatives au traitement de cette trame, telles qu'un numéro de version du protocole de communication, un indicateur de longueur de la trame, ou une adresse physique MAC de l'interface réseau 40 correspondante, voire une somme de contrôle ou tout autre code de détection d'erreurs. Ce code de détection d'erreurs peut, en variante, être placé dans un postambule (« trailer » en langue anglaise) de la trame. Une valeur de priorité PRIO est associée à cette trame, initialisée à partir de la valeur de priorité de référence TC. A chaque routage du message dans le réseau de communication par un équipement réseau, la priorité de la trame sera réinitialisée à partir de la valeur de référence.

Puis, au niveau de la couche physique L1, cette trame est encodée au sein d'un signal physique, tel que le signal porteur précédemment décrit, en vue d'assurer sa transmission sur la liaison physique 26.

Lorsque ce signal physique est reçu par une interface 40 correspondante d'un autre élément communicant 6, 8, 10, 22, 24 du réseau de communication 14, une trame est reconstruite à partir du signal physique reçu depuis la liaison physique 26 et son intégrité est éventuellement vérifiée. Le paquet est reconstruit à partir des données contenues dans la trame, puis ce paquet est routé au sein du réseau de communication, par étapes successives d'émission/réception qui se déroulent de façon analogue.

La sous-couche de contrôle d'accès au support est ici configurée pour implémenter un contrôle de l'accès à la liaison physique 26 afin d'éviter une collision entre des données émises par les différents éléments communicants au sein d'un même sous-réseau. En d'autres termes, deux nœuds connectés à une même liaison physique 26 ne doivent pas émettre de données en même temps sur cette liaison physique 26.

Par exemple, la couche de liaison de données implémente un protocole de contrôle d'accès de type CSMA/CA, pour « Carrier Sense Multiple Access with Collision Avoidance » en langue anglaise, ce protocole étant spécifiquement modifié pour tenir compte de la valeur de priorité des trames de données, comme expliqué dans ce qui suit.

Pour ce faire, l'interface réseau 40 des éléments communicants est ici configurée pour, vérifier un état interne de la liaison physique 26 et gérer l'envoi de données en fonction de cet état interne de la ligne physique.

En outre, ce contrôle d'accès est réalisé en fonction du niveau de priorité des messages circulant sur la liaison physique 26.

Par exemple, chaque trame de données générée par la couche de liaison de données L2 est associée à une valeur représentative d'un niveau de priorité

Cette valeur de priorité est, comme la valeur de priorité de référence TC, par exemple, une valeur numérique, telle qu'un nombre entier, ici encodé sous forme binaire au sein d'un champ dédié de l'en-tête de la trame de données.

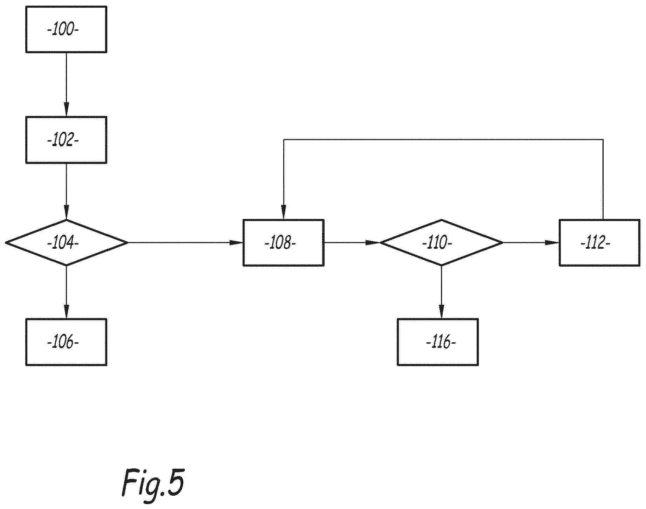

Par exemple, cette valeur numérique est comprise au sein d'un intervalle fermé allant de 0 à 9, ces valeurs indiquant ici un niveau de priorité décroissante, la valeur la plus basse indiquant un niveau de priorité maximal et la valeur la plus élevée indiquant un niveau de priorité minimal. Avec cette convention, une incrémentation de la valeur de priorité rend le message moins prioritaire, alors qu'une décrémentation de la valeur de priorité rend le message plus prioritaire. En variante, d'autres conventions sont possibles. De préférence, comme expliqué dans ce qui suit, la valeur de priorité de la trame de données est initialement choisie, lors de la construction de la trame par le nœud réseau émetteur, comme étant égale à la valeur de priorité de référence associée au paquet correspondant, à laquelle on ajoute une unité. La priorité de la trame ne peut ainsi être créée avec une priorité maximale, celle-ci étant réservée à la gestion des congestions du réseau. La figure 5 illustre un exemple de fonctionnement du procédé de gestion d'accès à la liaison physique 26 par l'interface réseau 40, d'un élément communicant, lors de l'émission d'un message. Par exemple, la mise en œuvre du procédé de gestion d'accès est réalisée automatiquement par le contrôleur réseau 42, par exemple, grâce à des instructions de code de programme exécutables stockées dans la mémoire 44.

Ce procédé de gestion d'accès est ici mis en œuvre indépendamment par l'interface réseau 40 de chacun des nœuds connectés à une même liaison physique 26, ici par chacun des équipements domotiques 6, 8, 10 connectés à cette liaison physique 26 ainsi que par les équipements réseau 22, 24 connecté à cette liaison physique 26, et notamment à partir de la couche de liaison de données L2 du protocole de communication.

En pratique, la couche de liaison de données prend successivement différents états internes :
- Un état d'occupation ou de réception, pendant une période d'occupation au cours de laquelle un signal porteur en provenance d'un nœud est présent sur la liaison physique. La durée de cet état de réception correspond à la durée d'émission du signal.
- Un état tampon (Guard Time), suite à la fin de l'état d'occupation de la liaison physique, pendant une période GT prédéterminée,
- Un état de priorité maximale, d'une durée prédéterminée,
- Des états de priorité intermédiaire, se succédant et ayant chacun une durée prédéterminée.
- Un état de priorité minimale, dont la durée se termine avec un nouvel état d'occupation.

Lors d'une étape 100, initialement, l'interface réseau 40 prépare automatiquement le message à envoyer, en l'occurrence la trame à envoyer. Cette préparation comporte l'assemblage de la trame en construisant l'en-tête, qui est ensuite concaténé avec les données à envoyer, celles-ci encapsulant le contenu du paquet correspondant. La valeur de priorité est alors initialisée à partir de la valeur de priorité de référence.

Ensuite, lors d'une étape 102, le message est prêt à être envoyé. Par exemple, il réside temporairement dans la mémoire informatique 44. Le message reste ainsi en attente et n'est pas envoyé à ce stade.

Une tentative d'envoi du message est alors mise en œuvre.

Ainsi, lors d'une étape 104, si l'état interne de la couche de liaison de données est dans un état de priorité plus faible ou égal au niveau de priorité du message, celui-ci est transmis immédiatement au cours d'une étape 106.

A l'issue de l'étape 106, l'envoi du message est terminé. La tentative d'envoi a réussi. Le procédé de gestion de priorité est à nouveau mis en œuvre par l'interface réseau 40 pour l'envoi d'un autre message. Le procédé de gestion de priorité est répété par chaque interface réseau 40, tant qu'elles ont des messages à envoyer sur la liaison physique 26.

Cependant, si lors de l'étape de détection 104 l'état interne de la couche de liaison de données ne permet pas l'envoi du message, alors, lors d'une étape d'attente 108, l'interface réseau 40 attend que l'état interne de la couche de liaison de données soit dans un état de priorité plus faible ou égal au niveau de priorité du message avant de tenter d'émettre le message. Le message est alors éventuellement émis après une durée d'attente aléatoire T_RAND, de sorte à réduire les collisions entre plusieurs messages de même priorité, au cours d'une étape 116.

Au cours de l'étape d'attente 108, l'état interne de la couche de liaison de données évolue. A chaque nouvelle entrée de la couche de liaison de données dans l'état de réception, et tant que le message en attente n'a pas pu être émis au cours de l'étape 116, la priorité du ou des messages en attente est augmentée, lors d'une étape 112 sauf si le niveau de priorité des messages en attente est déjà maximal, ou si le niveau de priorité du message en cours de réception est maximal. Le procédé retourne alors à l'étape d'attente 108.

Une période d'attente T débute en entrée de l'étape 108 et se termine à l'envoi du message. Pendant cette période d'attente T, le procédé peut retourner une ou plusieurs fois à l'étape 108.

Ainsi, les priorités étant augmentées quasi systématiquement, un message en attente finira par avoir une priorité plus importante que celles des autres messages et pourra être émis prioritairement.

Cependant, aucun nouveau message de niveau de priorité maximal n'est créé tant que tous les messages de niveau de priorité maximal n'ont pas tous été émis, ce qui permet de conserver un trafic prioritaire pour les messages de niveau de priorité maximal.

La priorité du message en réception, occupant la liaison physique, est déduite de l'état interne de la couche de liaison de données au moment de la réception de ce message.

Une fois que le message est émis, le procédé repart ensuite à l'étape 100. La couche de liaison de données entre alors dans l'état tampon.

Ainsi, la gestion des priorités des messages envoyés par les éléments communicants au niveau des liaisons physiques 26 au sein des sous-réseaux permet de limiter le risque qu'un élément communicant ne se trouve dans une situation où il ne peut pas envoyer de message à cause d'une saturation de la liaison physique 26.

Les modes de réalisation et les variantes envisagés ci-dessus peuvent être combinés entre eux pour générer de nouveaux modes de réalisation.

## Revendications

1. Procédé de gestion de trafic dans un réseau de communication (14), le procédé étant mis en œuvre par une interface réseau (40) d'un élément communicant (6, 8, 10, 22, 24) lors de l'émission d'un message sur une liaison physique (26) du réseau de communication (14), dans lequel l'interface réseau (40) est adaptée pour implémenter une pile de protocole et dans lequel les étapes du procédé sont mises en œuvre au niveau d'une couche de liaison de données (L2) de la pile de protocole, ladite couche de liaison de données prenant différents états internes, ledit message comprenant un niveau de priorité d'émission défini par une valeur de priorité (PRIO) dont la valeur la plus basse indique un niveau de priorité maximal et la valeur la plus élevée indique un niveau de priorité minimal,
le procédé comprenant des étapes consistant à :
- détecter (104) un état interne de la couche de liaison de données (L2),
- tant que l'état interne de la couche de liaison de données (L2) ne permet pas l'envoi immédiat du message :
- attendre (108) pendant une période d'attente (T) que l'état interne de la couche de liaison de données (L2) passe dans un état de priorité égale ou inférieure au niveau de priorité d'émission du message,
- augmenter (112) le niveau de priorité d'émission du message d'une unité à chaque fois que l'état interne de la liaison physique reprend un état d'occupation signifiant qu'un signal est présent sur la liaison physique pendant cette période d'attente ;
- envoyer (116) le message sur la liaison physique (26) lorsque l'état interne de la couche de liaison de données (L2) passe dans un état de priorité égale ou inférieure au niveau de priorité d'émission du message.

2. Procédé selon la revendication précédente dans lequel la couche de liaison de données prend successivement différents états internes :
- un état d'occupation ou de réception, pendant une période d'occupation, au cours de laquelle un signal porteur est présent sur la liaison physique ;
- un état tampon, suite à la fin de l'état d'occupation de la liaison physique, pendant une période (GT) prédéterminée,
- un état de priorité maximale,
- des états de priorité intermédiaire,
- un état de priorité minimale,
la durée des états de priorité étant prédéterminée ou se terminant par un nouvel état d'occupation.

3. Procédé selon une des revendications précédentes dans lequel la pile de protocole comprend une couche physique (L1), configurée pour assurer la gestion de signaux physiques porteurs de données du message sur la liaison physique (26), la couche de liaison de données (L2) configurée pour assurer le transfert des données au travers des interfaces réseaux de communication et une couche réseau (L3) qui assure l'échange et la transmission des messages au sein du réseau de communication (14).

4. Procédé selon la revendication précédente dans lequel la trame de données contient en outre des données à transmettre, celles-ci encapsulant un paquet réseau associé à une couche de la pile de protocole, le procédé comprenant une étape de préparation (100) du message à envoyer, consistant à initialiser la valeur de priorité d'émission de la trame avec une valeur égale à une valeur de priorité de référence (TC) du paquet réseau, celle-ci étant fonction du type d'élément communicant émettant le message ou fonction d'une criticité prédéfinie du message.

5. Procédé selon une des revendications précédentes dans lequel la valeur de priorité est une valeur numérique, telle qu'un nombre entier, encodé sous forme binaire au sein d'un champ dédié d'un en-tête du message, cette valeur numérique étant comprise au sein d'un intervalle fermé allant de 0 à 9.

6. Procédé selon une des revendications précédentes **caractérisé en ce qu'**il comprend une réinitialisation de la valeur de priorité d'émission de la trame à partir d'une valeur de priorité de référence (TC) du paquet réseau après chaque transmission du message par une interface réseau.

7. Procédé selon une des revendications précédentes **caractérisé en ce que**, lors de l'étape (116) d'envoi du message sur la liaison physique (26), lorsque l'état interne de la couche de liaison de données (L2) passe dans un état de priorité égale ou inférieure au niveau de priorité, l'émission comprend une durée d'attente aléatoire (T_RAND) entre le passage de l'état interne de la couche de liaison de données (L2) dans un état de priorité égale ou inférieure au niveau de priorité d'émission et l'envoi du message.

8. Interface réseau (40) pour un élément communicant (6, 8, 10, 22, 24) faisant partie d'un système domotique (4) incluant un réseau de communications (14) pourvu d'au moins une liaison physique (26), la liaison physique (26) reliant plusieurs éléments communicants (6, 8, 10,22, 24) au sein du réseau de communications (14), l'interface réseau (40) étant **caractérisée en ce qu'**elle est configurée pour mettre en œuvre le procédé de gestion de trafic selon l'une des revendications précédentes lors de chaque tentative d'envoi d'un message sur la liaison physique (26).

9. Elément communicant (6, 8, 10, 22, 24) **caractérisé en ce qu'**il comprend une interface réseau (40) selon la revendication précédente.

10. Système domotique (4) pour un bâtiment (2) **caractérisé en ce qu'**il comporte des éléments communicants (6, 8, 10, 22, 24), selon la revendication précédente, répartis au sein du bâtiment et un réseau de communication (14) auquel sont connectés les éléments communicants (6, 8, 10, 22, 24) au moyen de liaisons physique (26), le réseau de communication (14) autorisant une communication des éléments communicants (6, 8, 10, 22, 24) entre eux selon un protocole de communication prédéfini.

11. Système domotique (4) selon la revendication précédente, dans lequel le réseau de communication (14) comporte une pluralité de sous-réseaux (SN, SSN), chaque sous-réseau contenant des éléments communicants (6, 8, 10, 22, 24) connectés entre eux au sein de ce sous-réseau au moyen des liaisons physiques (26).

12. Système domotique (4) selon la revendication 10 ou 11 dans lequel le protocole de communication est le protocole IP.

13. Système domotique (4) selon l'une quelconque des revendications 10 à 12 dans lequel la liaison physique (26) est un bus de données filaire multipoints.

14. Bâtiment (2) équipé d'un système domotique (4) selon une des revendications 10 à 13, et comprenant des éléments communicants (6, 8, 10, 22, 24) selon la revendication 8.

15. Bâtiment selon la revendication précédente dans lequel le bâtiment comprend plusieurs zones (Z1, Z2, Z3, Z4), dans lequel le système domotique est conforme à l'une des revendications 10 à 12, et dans lequel chaque sous-réseau (SN, SSN) est associé à une zone du bâtiment (2), chaque sous-réseau contenant au moins un des éléments communicants (6, 8, 10, 22, 24).

## Patentansprüche

1. Verfahren zur Verwaltung des Verkehrs in einem Kommunikationsnetzwerk (14), wobei das Verfahren durchgeführt wird durch eine Netzwerkschnittstelle (40) eines Kommunikationselements (6, 8, 10, 22, 24) beim Senden einer Nachricht auf einer physikalischen Verbindung (26) des Kommunikationsnetzwerks (14), bei dem die Netzwerkschnittstelle (40) eingerichtet ist, um einen Protokollstapel zu implementieren, und bei dem die Schritte des Verfahrens auf der Höhe einer Datenverbindungsschicht (L2) des Protokollstapels durchgeführt werden, wobei die Datenverbindungsschicht verschiedene interne Zustände annimmt, wobei die Nachricht ein Sendeprioritätsniveau umfasst, das durch einen Prioritätswert (PRIO) definiert wird, dessen niedrigster Wert ein maximales Prioritätsniveau angibt und dessen höchster Wert ein minimales Prioritätsniveau angibt,
wobei das Verfahren folgende Schritte umfasst:
- Detektieren (104) eines internen Zustands der Datenverbindungsschicht (L2),
- solange wie der interne Zustand der Datenverbindungsschicht (L2) das sofortige Senden der Nachricht nicht erlaubt:
- Warten (108), während eines Wartezeitraums (T), dass der interne Zustand der Datenverbindungsschicht (L2) in einen Prioritätszustand übergeht, der gleich dem oder niedriger als das Sendeprioritätsniveau der Nachricht ist,
- Heraufsetzen (112) des Sendeprioritätsniveaus der Nachricht einer Einheit jedes Mal, wenn der interne Zustand der physikalischen Verbindung wieder einen Belegungszustand annimmt, was bedeutet, dass auf der physikalischen Verbindung während dieses Wartezeitraums ein Signal ansteht;
- Senden (116) der Nachricht auf der physikalischen Verbindung (26), wenn der interne Zustand der Datenverbindungsschicht (L2) in einen Prioritätszustand übergeht, der gleich dem oder niedriger als das Sendeprioritätsniveau der Nachricht ist.

2. Verfahren nach dem vorhergehenden Anspruch, bei dem die Datenverbindungsschicht nacheinander verschiedene interne Zustände annimmt:
- einen Belegungs- oder Empfangszustand, während eines Belegungszeitraums, in dessen Verlauf ein Trägersignal auf der physikalischen Verbindung ansteht;
- einen Pufferzustand, nach dem Ende des Belegungs- oder Empfangszustands, während eines vorbestimmten Zeitraums (GT),
- einen Zustand maximaler Priorität,
- Zwischenprioritätszustände,
- einen Zustand minimaler Priorität,
wobei die Dauer der Prioritätszustände vorbestimmt ist oder durch einen neuen Belegungszustand endet.

3. Verfahren nach einem der vorhergehenden Ansprüche, bei dem der Protokollstapel eine physikalische Schicht (L1), die eingerichtet ist, um die Verwaltung von physikalischen Datenträgersignalen der Nachricht auf der physikalischen Verbindung (26) sicherzustellen, die Datenverbindungsschicht (L2), die eingerichtet ist, um den Transfer der Daten über die Kommunikationsschnittstellen sicherzustellen, und eine Netzwerkschicht (L3), die den Austausch und die Übertragung der Nachrichten im Inneren des Kommunikationsnetzwerks (14) sicherstellt, umfasst.

4. Verfahren nach dem vorhergehenden Anspruch, bei dem der Datenframe ferner zu übertragende Daten enthält, wobei diese ein Netzwerkpaket einkapseln, das einer Schicht des Protokollstapels zugeordnet ist, wobei das Verfahren einen Schritt zum Vorbereiten (100) der zu sendenden Nachricht umfasst, der darin besteht, den Sendeprioritätswert des Frame mit einem Wert zu initialisieren, der gleich einem Referenzprioritätswert (TC) des Netzwerkpakets ist, wobei dieser vom Typ des Kommunikationselements, der die Nachricht sendet, oder von einer vordefinierten Kritizität der Nachricht abhängt.

5. Verfahren nach einem der vorhergehenden Ansprüche, bei dem der Prioritätswert ein numerischer Wert ist, wie eine Ganzzahl, die in binärer Form im Inneren eines dedizierten Feldes einer Kopfzeile der Nachricht codiert ist, wobei dieser numerische Wert innerhalb eines geschlossenen Intervalls liegt, das von 0 bis 9 reicht.

6. Verfahren nach einem der vorhergehenden Ansprüche, **dadurch gekennzeichnet, dass** er eine Reinitialisierung des Sendeprioritätswerts des Frame ausgehend von einem Referenzprioritätswert (TC) des Netzwerkpakets nach jeder Übertragung der Nachricht durch eine Netzwerkschnittstelle umfasst.

7. Verfahren nach einem der vorhergehenden Ansprüche, **dadurch gekennzeichnet, dass**, beim Schritt zum Senden (116) der Nachricht auf der physikalischen Verbindung (26), wenn der interne Zustand der Datenverbindungsschicht (L2) in einen Prioritätszustand übergeht, der gleich dem oder niedriger als das Prioritätsniveau, ist, das Senden eine zufällige Wartedauer (T_RAND) zwischen dem Übergang vom internen Zustand der Datenverbindungsschicht (L2) in einen Prioritätszustand, der gleich dem oder niedriger als das Sendeprioritätsniveau ist, und dem Senden der Nachricht, umfasst.

8. Netzwerkschnittstelle (40) für ein Kommunikationselement (6, 8, 10, 22, 24), das Teil eines Heimautomatisierungssystem (4) ist, enthaltend ein Kommunikationsnetzwerk (14), das mit wenigstens einer physikalischen Verbindung (26) versehen ist, wobei die physikalische Verbindung (26) mehrere Kommunikationselemente (6, 8, 10, 22, 24) im Inneren des Kommunikationsnetzwerks (14) verbindet, wobei die Netzwerkschnittstelle (40) **dadurch gekennzeichnet ist, dass** sie eingerichtet ist, um das Verfahren zur Verwaltung des Verkehrs nach einem der vorhergehenden Ansprüche bei jedem Sendeversuch für eine Nachricht auf der physikalischen Verbindung (26) durchzuführen.

9. Kommunikationselement (6, 8, 10, 22, 24), **dadurch gekennzeichnet, dass** es eine Netzwerkschnittstelle (40) nach dem vorhergehenden Anspruch umfasst.

10. Heimautomatisierungssystem (4) für ein Gebäude (2) **dadurch gekennzeichnet, dass** es Kommunikationselemente (6, 8, 10, 22, 24), nach dem vorhergehenden Anspruch, aufweist, die im Inneren eines Gebäudes verteilt sind, und ein Kommunikationsnetzwerk (14) aufweist, mit dem die Kommunikationselemente (6, 8, 10, 22, 24) mittels physikalischer Verbindungen (26) verbunden sind, wobei das Kommunikationsnetzwerk (14) eine Kommunikation der Kommunikationselemente (6, 8, 10, 22, 24) miteinander gemäß einem vordefinierten Kommunikationsprotokoll erlaubt.

11. Heimautomatisierungssystem (4) nach dem vorhergehenden Anspruch, wobei das Kommunikationsnetzwerk (14) eine Mehrzahl von Teilnetzwerken (SN, SSN) umfasst, wobei jedes Teilnetzwerk Kommunikationselemente (6, 8, 10, 22, 24) enthält, die im Inneren dieses Teilnetzwerks mittels physikalischer Verbindungen (26) miteinander verbunden sind.

12. Heimautomatisierungssystem (4) nach Anspruch 10 oder 11, wobei das Kommunikationsprotokoll das IP-Protokoll ist.

13. Heimautomatisierungssystem (4) nach einem der Ansprüche 10 bis 12, wobei die physikalische Verbindung (26) ein drahtgebundener Multipunkt-Datenbus ist.

14. Gebäude (2), versehen mit einem Heimautomatisierungssystem (4) nach einem der Ansprüche 10 bis 13 und umfassend Kommunikationselemente (6, 8, 10, 22, 24) nach Anspruch 8.

15. Gebäude nach dem vorhergehenden Anspruch, wobei das Gebäude Heimautomatisierungssystem Zonen (Z1, Z2, Z3, Z4) umfasst, wobei das Heimautomatisierungssystem einem der Ansprüche 10 bis 12 entspricht und wobei jedes Teilnetzwerk (SN, SSN) einer Zone des Gebäudes (2) zugeordnet ist, wobei jedes Teilnetzwerk wenigstens eines der Kommunikationselemente (6, 8, 10, 22, 24) enthält.

## Claims

1. Method for managing traffic on a communications network (14), wherein the method is executed by a network interface (40) of a communicating device (6, 8, 10, 22, 24) when transmitting a message over a physical link (26) of the communications network (14), wherein the network interface (40) is adapted to implement a protocol stack, and wherein the steps of the method are executed in a data link layer (L2) of the protocol stack, said data link layer receiving different internal states, said message comprising a transmission priority level defined by a priority value (PRIO) whose lowest value indicates a maximum priority and the highest value indicates a minimum priority,
wherein the method comprises the steps of:
- detecting (104) an internal state of the data link layer (L2),
- as long as the internal state of the data link layer (L2) does not allow the message to be sent immediately:
- waiting (108) for a waiting period (T) until the internal state of the data link layer (L2) transitions to a priority state lower than or equal to the message transmission priority level,
- increasing (112) the message transmission priority level by one unit each time the internal state of the physical link returns to an occupation state meaning that a signal is present on the physical link during this waiting period;
- sending (116) the message on the physical link (26) when the internal state of the data link layer (L2) transitions to a priority state lower than or equal to the message transmission priority level.

2. Method according to the foregoing claim, wherein the data link layer successively enters various internal states:
- an occupation or receiving state, during an occupation period, during which a carrier signal is present on the physical link,
- a buffer state, following the end of the occupation state of the physical link, for a predetermined period (GT),
- a maximum priority state,
- intermediate priority states,
- a minimum priority state,
wherein the duration of the priority states is predetermined or ends with a new engaged state.

3. Method according to any of the foregoing claims, wherein the protocol stack comprises a physical layer (L1), configured to manage physical signals carrying message data on the physical link (26), wherein the data link layer (L2) is configured to transfer data via the communications network interfaces, and a network layer (L3) to exchange and transmit messages within the communications network (14).

4. Method according to the foregoing claim, wherein the data frame further contains data to be transmitted, which data encapsulate a network packet associated with a layer of the protocol stack, wherein the method comprises preparing (100) the message to be sent, consisting of initialising the transmission priority value of the frame with a value equal to a reference priority value (TC) of the network packet, wherein this is a function of the type of communicating device that is transmitting the message or of a predefined criticality of the message.

5. Method according to any of the foregoing claims, wherein the priority value is a numerical value, such as an integer, encoded in binary form within a dedicated field of a header of the message, wherein this numerical value is contained within a closed interval from 0 to 9.

6. Method according to any of the foregoing claims, **characterised in that** it comprises reinitialising the transmission priority value of the frame based on a reference priority value (TC) of the network packet following each transmission of the network by a network interface.

7. Method according to any of the foregoing claims, **characterised in that**, when sending (116) the message over the physical link (26), when the internal state of the data link layer (L2) transitions to a priority state lower than or equal to the priority level, the transmission comprises a random wait time (T_RAND) between the transition of the internal state of the data link layer (L2) to a priority state lower than or equal to the transmission priority level and sending the message.

8. Network interface (40) for a communicating device (6, 8, 10, 22, 24) that is part of a home automation system (4) including a communications network (14) having at least one physical link (26), wherein the physical link (26) connects several communicating devices (6, 8, 10,22, 24) within the communications network (14), the network interface (40) being **characterised in that** it is configured to execute the traffic management method according to any of the foregoing claims at each attempt to send a message over the physical link (26).

9. Communicating device (6, 8, 10, 22, 24), **characterised in that** it comprises a network interface (40) according to the foregoing claim.

10. Home automation system (4) for a building (2), **characterised in that** it includes communicating devices (6, 8, 10, 22, 24) according to the foregoing claim that are distributed within the building, and a communications network (14) to which the communicating devices (6, 8, 10, 22, 24) are connected by means of physical links (26), wherein the communications network (14) permits communications between the communicating devices (6, 8, 10, 22, 24) according to a predefined communications protocol.

11. Home automation system (4) according to the foregoing claim, wherein the communications network (14) includes a plurality of sub-networks (SN, SSN), wherein each sub-network contains communicating devices (6, 8, 10, 22, 24) that are interconnected within the sub-network by means of physical links (26).

12. Home automation system (4) according to the claim 10 or 11, wherein the communication protocol is the IP protocol.

13. Home automation system (4) according to any of claims 10 to 12, wherein the physical link (26) is a wired multipoint data bus link.

14. Building (2) equipped with a home automation system (4) according to claims 10 to 13 and comprising communicating devices (6, 8, 10, 22, 24) according to claim 8.

15. Building according to the foregoing claim, wherein the building comprises several zones (Z1, Z2, Z3, Z4), wherein the home automation system is consistent with any of claims 10 to 12, and wherein each sub-network (SN, SSN) is associated with a zone of the building (2), each sub-network containing at least one of the communicating devices (6, 8, 10, 22, 24).
